# EUROPEAN PATENT APPLICATION

(11) **EP 4 723 440 A1**
(43) Date of publication of application: **08.04.2026**
(21) Application number: 24814842.1
(22) Date of filing: 19.01.2024
(51) Int. Cl.: H02K 7/04, H02K 1/22, H02K 15/16

(54) **MOTOR DEVICE AND METHOD FOR MANUFACTURING SAME**

(30) Priority: 31.05.2023 JP 2023090370
(71) Applicant: Mitsuba Corporation, Kiryu-shi Gunma 376-8555 (JP)
(72) Inventor: JO Yutaro, Kiryu-shi, Gunma 376-8555 (JP); YOSHIDA Yasushi, Kiryu-shi, Gunma 376-8555 (JP); BUSUJIMA Junichi, Kiryu-shi, Gunma 376-8555 (JP); HOSHINO Terumasa, Kiryu-shi, Gunma 376-8555 (JP)
(74) Representative: Winter, Brandl - Partnerschaft mbB
(86) International application number: PCT/JP2024/001450
(87) International publication number: WO 2024/247354

(57) **Abstract**

Provided are: a motor device capable of adjusting the rotation balance of a rotor while suppressing an output torque reduction or the like; and a method for manufacturing the same. A rotor 33 equipped with a rotating shaft 34, a rotor core 33a fixed to the rotating shaft 34, a magnet MG fixed to the rotor core 33a, and an adjustment member 37 which is fixed to the rotating shaft 34 and adjusts the rotation balance of the rotor 33, wherein the separation distance L1 between the magnet MG and the adjustment member 37 in the axial direction of the rotating shaft 34 is greater than the separation distance L2 between the magnet MG and the stator 32 in the radial direction of the rotating shaft 34 (L1>L2). As a result, the rotation balance of the rotor 33 can be adjusted, and the adjustment member 37 can be positioned farther from the magnet MG than is the stator 32. Thus, movement of the magnetic flux [Wb] from the magnet MG toward the adjustment member 37 is suppressed, and is efficiently directed toward the stator 32.

## Description

### BACKGROUND

### Technical Field

The invention relates to a motor device including a stator and a rotor that rotates relative to the stator, and a manufacturing method thereof.

### Description of Related Art

For example, Patent Document 1 discloses a brushless motor including a stator and a rotor that rotates relative to the stator. Specifically, the rotor is rotatably provided on the radial inner side of the stator with a gap therebetween, and metal balance correction parts are provided on both sides of the rotor core that forms the rotor in the axial direction.

The pair of balance correction parts are fixed to a rotation shaft via a bush, and are provided in close contact with end faces on both sides of the rotor core in the axial direction. The balance correction parts have a function of preventing a permanent magnet provided inside the rotor core from projecting outward, and a function of correcting the rotational balance of the rotor by partially cutting off the outer peripheral part.

### [Prior Art Document(s)]

### [Patent Document(s)]

Patent Document 1: Japanese Patent Application Laid-open No. 2005-160196

### SUMMARY

### [Issues to be solved by the invention]

However, according to the technology described in Patent Document 1, since the metal balance correction parts are provided in close contact with the permanent magnet, a portion of the magnetic flux generated by the permanent magnet flows toward the balance correction parts, which reduces the magnetic flux toward the stator core. In other words, as a result of providing the balance correction parts, an issue such as a decreased output torque of the brushless motor occurs.

An object of the invention is to provide a motor device and a manufacturing method thereof that enables adjustment of the rotational balance of the rotor while suppressing the decrease in output torque, etc.

### [Means for solving the issues]

An aspect of the invention provides a motor device having: a stator; and a rotor, rotating with respect to the stator. The rotor includes: a rotation shaft; a rotor core, fixed to the rotation shaft; a magnet, fixed to the rotor core; and an adjustment member, fixed to the rotation shaft and adjusting rotation balance of the rotor. A separation distance between the magnet and the adjustment member in an axial direction of the rotation shaft is longer than a separation distance between the magnet and the stator in a radial direction of the rotation shaft.

Another aspect of the invention provides a method for manufacturing a motor device. The motor device includes: a stator; and a rotor, rotating with respect to the stator.. The rotor includes: a rotation shaft; a rotor core, fixed to the rotation shaft; a magnet, fixed to the rotor core; and an adjustment member, fixed to the rotation shaft and adjusting rotation balance of the rotor. The method for manufacturing the motor device includes: a rotor core fixing process for fixing the rotor core to the rotation shaft; a magnet material fixing process for fixing a magnet material, which has not been magnetized, to the rotor core; a rotation balance adjustment process for fixing the adjustment member at a position separated from the magnet material in an axial direction of the rotation shaft and cutting an outer peripheral part of the adjustment member; and a magnet magnetization process, performed after the rotation balance adjustment process to magnetize the magnet material.

### [Effects of Invention]

According to the invention, it is possible to realize a motor device having a structure that enables adjustment of the rotational balance of the rotor while suppressing the decrease in output torque, etc., and a manufacturing method of the motor device.

### BRIEF DESCRIPTION OF THE DRAWINGS

[FIG. 1] FIG. 1 is a schematic view of a sunroof device disposed on a roof of a vehicle.
[FIG. 2] FIG. 2 is a perspective view showing an output gear side of a sunroof motor.
[FIG. 3] FIG. 3 is a perspective view showing a cover member side of the sunroof motor.
[FIG. 4] FIG. 4 is a cross-sectional view of the sunroof motor along an axial direction of a rotation shaft.
[FIG. 5] FIG. 5 is a perspective view of a rotor as seen from a worm side.
[FIG. 6] FIG. 6 is a perspective view of the rotor as seen from a rotor core side.
[FIG. 7] FIG. 7 is a perspective view of a bearing support member as seen from a motor part side.
[FIG. 8] FIG. 8 is a perspective view of the bearing support member as seen from a deceleration mechanism part side.
[FIG. 9] FIG. 9 is a view describing an assembly procedure (1) of the rotor.
[FIG. 10] FIG. 10 is a view describing an assembly procedure (2) of the rotor.
[FIG. 11] FIG. 11 is a view describing an assembly procedure (1) of a sunroof motor.
[FIG. 12] FIG. 12 is a view describing an assembly procedure (2) of the sunroof motor.

### DESCRIPTION OF THE EMBODIMENTS

The following describes an embodiment of the invention in detail using the drawings.

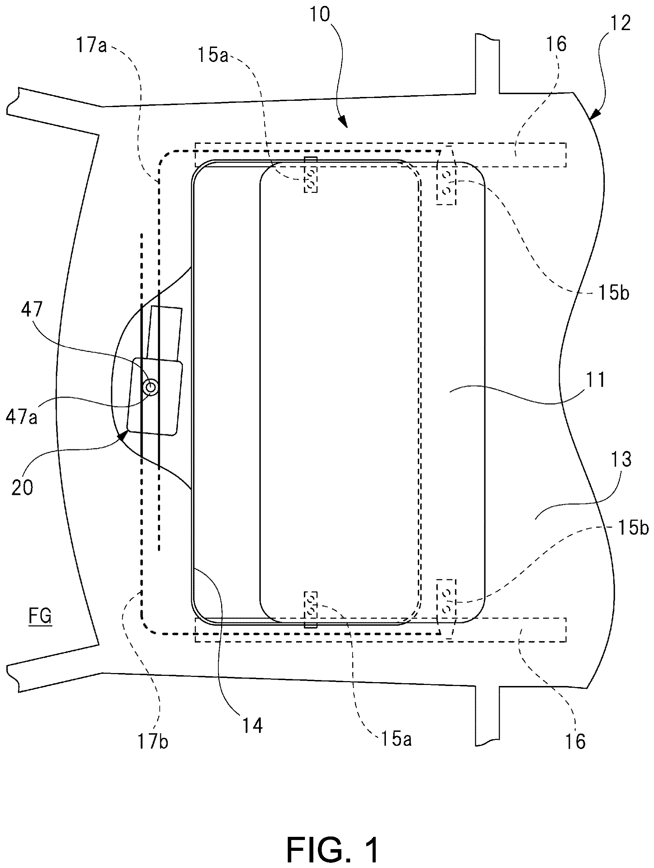

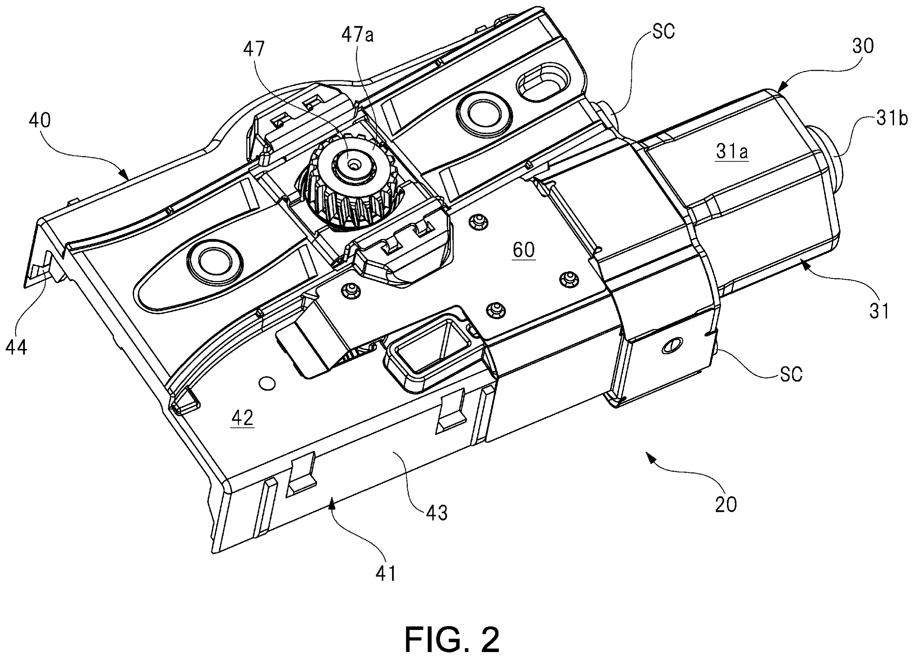

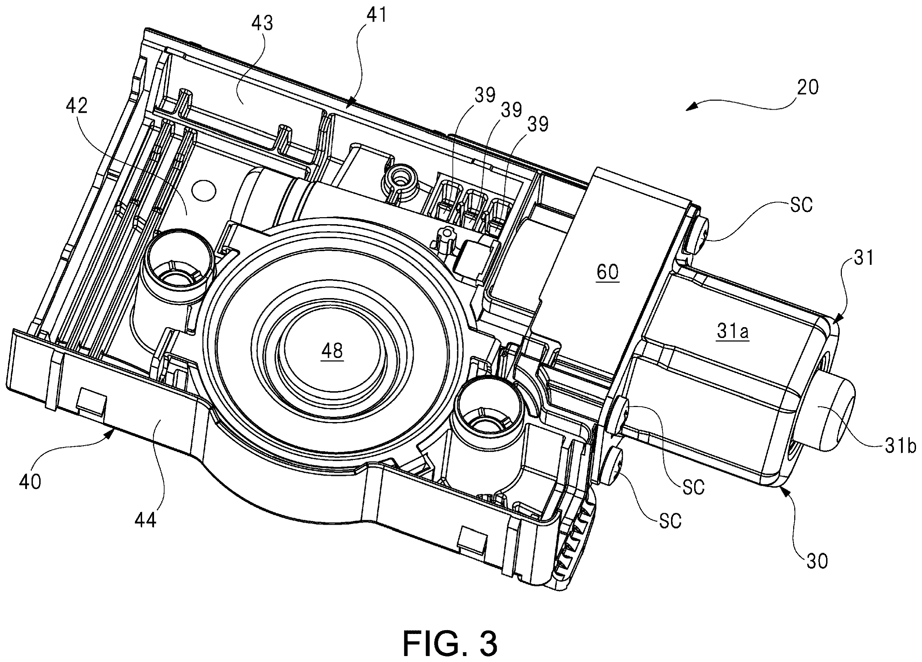

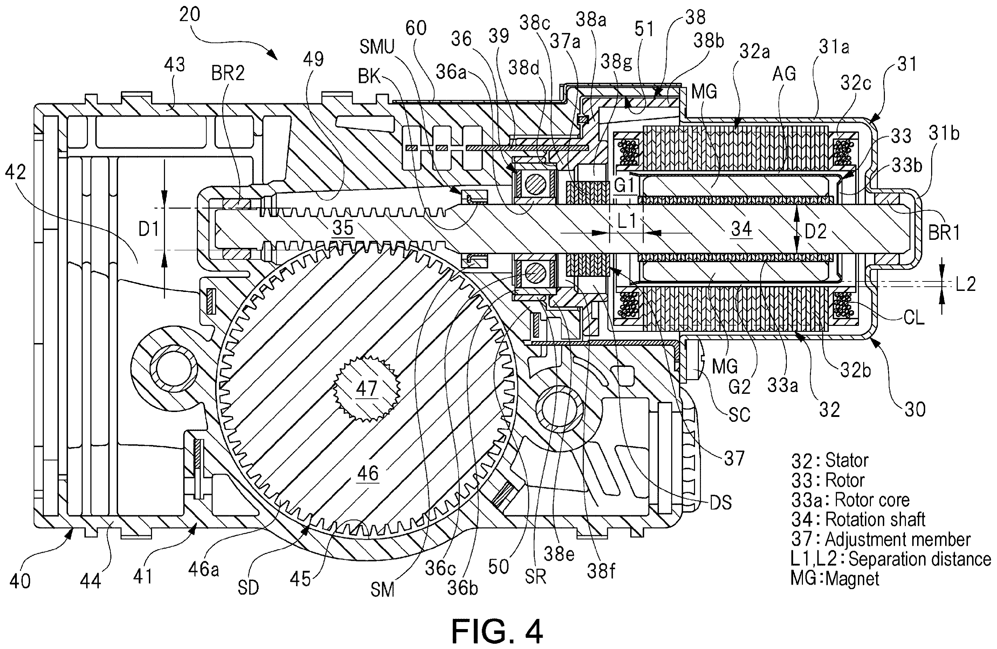

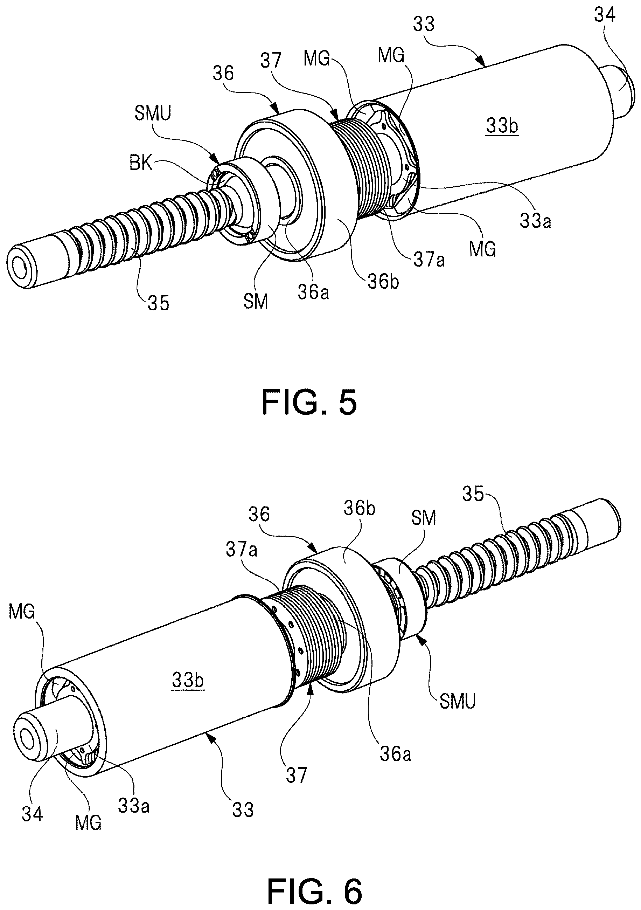

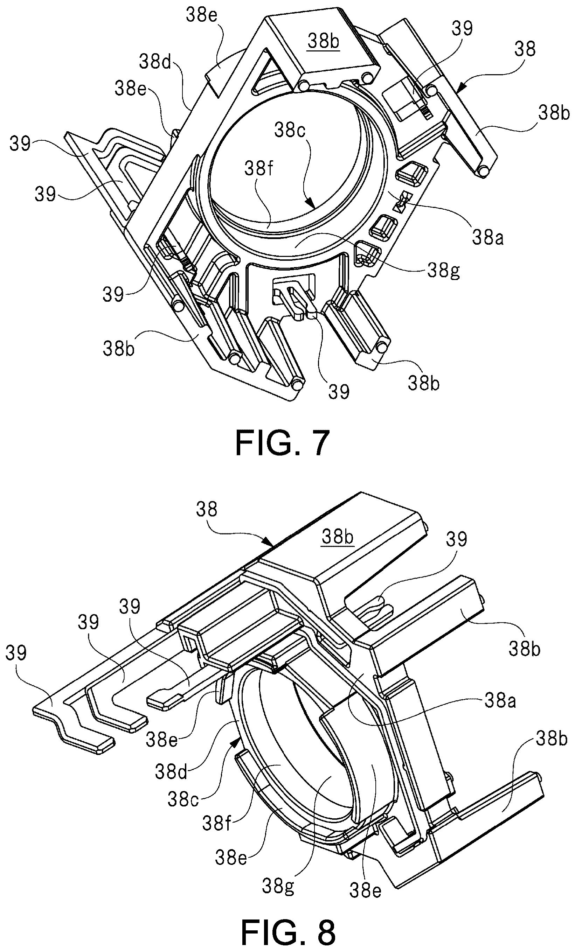

FIG. 1 is a schematic view showing a sunroof device disposed on a roof of a vehicle. FIG. 2 is a perspective view showing an output gear side of a sunroof motor. FIG. 3 is a perspective view showing a cover member side of the sunroof motor. FIG. 4 is a cross-sectional view showing the sunroof motor along an axial direction of a rotation shaft. FIG. 5 is a perspective view showing a rotor as seen from a worm side. FIG. 6 is a perspective view showing the rotor as seen from a rotor core side. FIG. 7 is a perspective view showing a bearing support member as seen from a motor part side. FIG. 8 is a perspective view showing the bearing support member as seen from a deceleration mechanism part side.

### <Overview of the sunroof device>

As shown in FIG. 1, a sunroof device 10 includes a roof panel 11. The roof panel 11 opens and closes an opening part 14 formed in a roof 13 of a vehicle 12. A pair of shoes 15a, 15b are fixed to both sides (upper and lower sides in FIG. 1) of the roof panel 11 in the vehicle width direction.

Also, guide rails 16 extending in the front-rear direction (left-right direction in FIG. 1) of the vehicle 12 are respectively fixed to both sides of the opening part 14 in the vehicle width direction in the roof 13. The roof panel 11 moves in the front-rear direction of the vehicle 12 as the pair of shoes 15a, 15b are guided by the corresponding pair of guide rails 16.

An end of each of drive cables 17a, 17b with gears is connected to each of the shoes 15b located on the rear side (right side in FIG. 1) of the vehicle 12. The other ends of the drive cables 17a, 17b are routed to the front side (left side in FIG. 1) of the vehicle 12 with respect to the opening part 14.

The sunroof motor 20 is provided inside the roof 13 on the front side of the vehicle 12 with respect to the opening part 14, and between the opening part 14 and a front glass FG. The other ends of the pair of drive cables 17a, 17b are meshed with an output gear 47a provided in the sunroof motor 20.

As a result, when the sunroof motor 20 is driven, the pair of drive cables 17a, 17b move in the longitudinal direction thereof in directions opposite to each other. Consequently, the roof panel 11 is pushed and pulled by the pair of drive cables 17a, 17b through the pair of shoes 15b, thereby opening and closing the opening part 14.

The sunroof motor 20 corresponds to a motor device in the invention.

### <Sunroof motor>

As shown in FIG. 2 to FIG. 4, the sunroof motor 20 includes an electric motor part 30 and a deceleration mechanism part 40. The electric motor part 30 and the deceleration mechanism part 40 are fixed to each other by a total of three fixing screws SC.

### <Electric motor part>

The electric motor part 30 adopts a brushless motor and has a motor case 31 formed in a bottomed cylindrical shape by deep drawing, etc., on a steel plate (magnetic body), etc. The motor case 31 forms an outer frame of the electric motor part 30 and includes a sidewall part 31a formed in a substantially regular hexagonal cross-section. Additionally, one side of the sidewall part 31a in the axial direction (the right side in FIG. 2 to FIG. 4) is closed by a stepped bottom wall part 31b.

### <Stator>

As shown in FIG. 4, a stator 32 is accommodated inside the motor case 31. The stator 32 has a stator core 32a formed by laminating multiple thin steel plates (magnetic body). The stator core 32a is fixed to the motor case 31 and includes a total of six teeth 32b (not shown in detail). On the teeth 32b, three-phase coils CL consisting of U-phase, V-phase, and W-phase are wound respectively via an insulator (insulating member) 32c.

### <Rotor>

As shown in FIG. 4 to FIG. 6, a rotor 33 is rotatably provided on the radial inner side of the stator 32 via a predetermined air gap AG. The rotor 33 is configured to rotate relative to the stator 32 and has a rotor core 33a formed in a substantially cylindrical shape. The rotor core 33a is formed by laminating multiple thin steel plates (magnetic body), and a total of four magnets MG are fixed to the radial outer side of the rotor core 33a by using an adhesive, etc. Specifically, each magnet MG is disposed at equal intervals (an interval of 90°) in the peripheral direction of the rotor core 33a.

Additionally, the radial outer side of each magnet MG fixed to the rotor core 33a is covered by a magnet holder 33b formed in a substantially cylindrical shape by using a thin stainless steel plate, etc. The magnet holder 33b prevents the magnets MG from falling off from the rotor core 33a. As a result, even when the rotor 33 rotates at a high speed, the magnets MG do not detach from the rotor core 33a due to centrifugal force at this time.

### <Rotation shaft>

The rotor core 33a is fixed to a rotation shaft 34. Specifically, the rotation shaft 34 is fixed to the rotation center of the rotor core 33a by press-fitting. In this way, the rotor 33 includes the rotation shaft 34, and the rotation shaft 34 is made of a round steel bar to ensure sufficient strength.

One side of the rotation shaft 34 (right side in FIG. 4) in the axial direction is accommodated inside the motor case 31 and is rotatably supported by a first metal (radial bearing) BR1 mounted on the bottom wall part 31b of the motor case 31. On the other hand, the other side (left side in FIG. 4) of the rotation shaft 34 in the axial direction is accommodated inside a housing 41 forming the deceleration mechanism part 40, and is rotatably supported by a second metal (radial bearing) BR2 mounted in a worm accommodation part 49 of the housing 41.

The first metal BR1 corresponds to a first bearing in the invention, and the second metal BR2 corresponds to a second bearing in the invention.

Furthermore, a worm 35 forming a deceleration mechanism SD is integrally provided on the other side of the rotation shaft 34 in the axial direction. That is, the worm 35 is also made of a round steel bar. Accordingly, the rigidity of the worm 35 is increased to prevent the worm 35 from bending and consequently ensure reliable meshing with a worm wheel 46.

### <Ball bearing>

Furthermore, a ball bearing 36 is mounted on the central part of the rotation shaft 34 in the axial direction. That is, the ball bearing 36 rotatably supports the central part of the rotation shaft 34 in the axial direction. In the axial direction of the rotation shaft 34, the rotor core 33a to which the magnet MG is fixed and the ball bearing 36 are disposed in side-by-side, and the rotor core 33a to which the magnet MG is fixed is positioned between the ball bearing 36 and the first metal BR1.

The ball bearing 36 corresponds to a third bearing in the invention.

Similar to the first metal BR2 and the second metal BR2, the ball bearing 36 rotatably supports the rotation shaft 34, and includes an inner race (inner wheel) 36a formed in a substantially cylindrical shape by using a steel material, and an outer race (outer wheel) 36b formed in a substantially cylindrical shape by using a steel material, like the inner race 36a but with a diameter larger than the inner race 36a. Also, multiple balls (steel balls) 36c are provided between the inner race 36a and the outer race 36b.

Here, the inner race 36a is fixed to the rotation shaft 34 by press-fitting. That is, the inner race 36a rotates together with the rotation shaft 34. Also, as shown in FIG. 4, an outer diameter dimension D1 of the worm 35 is smaller than an outer diameter dimension D2 of the rotation shaft 34 (D1<D2). This allows the ball bearing 36 to be press-fitted onto the rotation shaft 34 from the side of the worm 35 in the axial direction of the rotation shaft 34.

### <Sensor magnet unit>

Also, in the axial direction of the rotation shaft 34, a sensor magnet unit SMU is provided between the worm 35 and the ball bearing 36. The sensor magnet unit SMU has a cylindrical bracket member BK fixed to the rotation shaft 34 by press-fitting, and a sensor magnet SM held by the bracket member BK. Here, the sensor magnet SM is used to detect the rotation state of the rotation shaft 34 (rotor 33), specifically the rotation direction, rotation speed, etc.

The sensor magnet unit SMU also rotates together with the rotation shaft 34, similar to the inner race 36a of the ball bearing 36. Also, the sensor magnet unit SMU can be press-fitted onto the rotation shaft 34 from the side of the worm 35 in the axial direction of the rotation shaft 34.

### <Adjustment member>

Furthermore, in the axial direction of the rotation shaft 34, an adjustment member 37 used to adjust the rotational balance of the rotor 33 is provided between the ball bearing 36 and the rotor core 33a (magnet MG). The adjustment member 37 is formed in a substantially cylindrical shape by laminating multiple thin steel plates (magnetic bodies) 37a, and is fixed to the rotation shaft 34 by press-fitting.

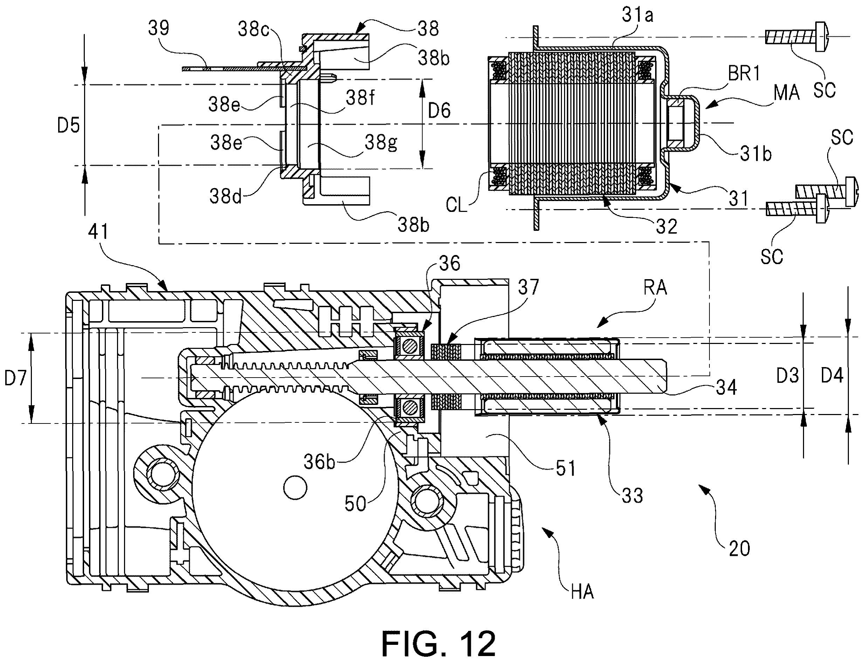

Also, an outer diameter dimension D3 (see FIG. 12) of the adjustment member 37 is equal to or less than an outer diameter dimension D4 (see FIG. 12) of the rotor 33 (D3<D4). Here, the outer diameter dimension D4 of the rotor 33 corresponds to a portion of the magnet holder 33b having the largest in the radial direction.

The adjustment member 37 is positioned between the ball bearing 36 and the rotor core 33a in the axial direction of the rotation shaft 34, and is located in the vicinity of the ball bearing 36 (closer to the ball bearing 36) with respect to the magnet MG. As a result, as shown in FIG. 4, a relatively long first gap G1 is formed between the magnet MG and the adjustment member 37 in the axial direction of the rotation shaft 34.

Here, a relatively short second gap G2 is formed between the magnet MG and the stator 32 in the radial direction of the rotation shaft 34. When a comparison target for comparison with a separation distance L1 between the magnet MG and the adjustment member 37 in the axial direction of the rotation shaft 34 is set as a separation distance L2 between the magnet MG and the stator 32 in the radial direction of the rotation shaft 34, the separation distance L1 is longer than the separation distance L2 (L1>L2). Specifically, the separation distance L1 is "approximately 7 times" the separation distance L2 (L1□L2×7).

In this way, by positioning the adjustment member 37 at a distance from the magnet MG, farther than the stator 32, the magnetic flux [Wb] from the total of four magnets MG is suppressed from flowing toward the adjustment member 37. In other words, the magnetic flux [Wb] from each magnet MG is efficiently directed toward the stator 32. Therefore, even though the adjustment member 37 made of magnetic body is provided between the ball bearing 36 and the magnet MG, the reduction in output torque of the sunroof motor 20 is suppressed.

The adjustment member 37 has the function of suppressing the rotation wobbling of the rotor 33 caused by minute warping of the rotation shaft 34 that varies from product to product, and minute position misalignment between the rotation center of the rotation shaft 34 and the rotation center of the rotor core 33a. Specifically, during the assembly of the rotor 33, the rotational balance of the rotor 33 is optimized (rotation wobbling suppression) by partially cutting the outer periphery of the adjustment member 37 while rotating the rotor 33.

Accordingly, it is possible to reduce the operation sound of the sunroof motor 20 (improved quietness). In particular, since the sunroof motor 20 is positioned above the heads of the driver and passengers, loud operation sounds may be unpleasant to the ear. Therefore, it is necessary to further improve the quietness of the sunroof motor 20. The assembly procedure of the rotor 33, including the adjustment of the rotational balance of the rotor 33, will be described in detail later.

### <Bearing support member>

Furthermore, the electric motor part 30 includes a bearing support member 38, as shown in FIG. 4, FIG. 7, and FIG. 8. The bearing support member 38 is formed in a predetermined shape by using a resin material such as plastic. The bearing support member 38 includes a support body 38a formed in a substantially flat plate shape, and multiple wall parts 38b that extend into the housing 41. That is, the bearing support member 38 is a component mounted to the housing 41.

An annular support part 38c is integrally provided on the support body 38a of the bearing support member 38. The annular support part 38c includes an annular flat surface 38d directed toward the other side (the left side in FIG. 4) of the rotation shaft 34 in the axial direction, and the annular flat surface 38d contacts the outer race 36b of the ball bearing 36 from the one side in the axial direction (the right side in FIG. 4). That is, the annular support part 38c supports the entire periphery of one side of the outer race 36b in the axial direction. The other side (the left side in FIG. 4) of the outer race 36b in the axial direction is supported by a bearing mounting part 50 provided in the housing 41.

In this way, the outer race 36b of the ball bearing 36 is sandwiched between the housing 41 and the bearing support member 38 in the axial direction of the rotation shaft 34. Here, the bearing support member 38 is fixed without rattling inside the housing 41 by fixing the motor case 31 to the housing 41 with a total of three fixing screws SC. That is, the bearing support member 38 is sandwiched between the outer race 36b and the motor case 31 in the axial direction of the rotation shaft 34.

In addition, a total of three positioning protrusions 38e are integrally provided on the annular support part 38c. The positioning protrusions 38e extend in the peripheral direction of the annular support part 38c and are formed in a substantially arc shape. In addition, the positioning protrusions 38e are disposed at equal intervals (120-degree intervals) in the peripheral direction of the annular support part 38c. Furthermore, each of the positioning protrusions 38e protrudes from the annular support part 38c toward the other side (the left side in FIG. 4) in the axial direction. The outer race 36b of the ball bearing 36 contacts and fits into the inner side of the total of three positioning protrusions 38e.

Accordingly, it is possible for the axis of the ball bearing 36 and the axis of the annular support part 38c to be accurately aligned (centered) during assembling of the sunroof motor 20. In other words, the ball bearing 36 has a function of positioning the bearing support member 38 in the proper position via each of the positioning protrusions 38e.

Furthermore, on the radial inner side of the annular support part 38c, a small-diameter through hole 38f and a large-diameter through hole 38g that penetrate in the axial direction of the annular support part 38c are provided. An inner diameter dimension D5 of the through small-diameter hole 38f is smaller than an inner diameter dimension D6 of the large-diameter through hole 38g (D5<D6).

Here, on the radial inner sides of the small-diameter through hole 38f and the large-diameter through hole 38g, as shown in FIG. 4, the adjustment member 37 is disposed. Since the annular support part 38c is sized to be able to support the outer race 36b of the ball bearing 36 from one side in the axial direction, a relatively large dead space DS is formed on the radial inner sides of the small-diameter through hole 38f and the large-diameter through hole 38g.

By effectively utilizing the dead space DS, the adjustment member 37 is disposed in the dead space DS. Therefore, by providing the adjustment member 37 on the rotation shaft 34, the size of the housing 41 or the entire sunroof motor 20 does not increase.

In addition, a total of three conductive members 39 (see FIG. 8) are mounted to the support body 38a in correspondence with the three-phase coils CL (see FIG. 4). The conductive members 39 are formed in a substantially rod shape by using brass, etc., with excellent conductivity, and one side (the front side in FIG. 7) of the conductive members 39 in the longitudinal direction is electrically connected to each of the three-phase coils CL. Comparatively, the other side (the left side in FIG. 8) of the conductive members 39 in the longitudinal direction is electrically connectable to connection terminals (not shown) of an external connector provided on the side of the vehicle 12 (see FIG. 1). Accordingly, the driving current is supplied from an in-vehicle controller, etc., to the three-phase coils CL of the sunroof motor 20, thus rotating the rotation shaft 34 in the forward or reverse direction.

In this way, the bearing support member 38 has a function of holding the total of three conductive members 39 in addition to the function of supporting the ball bearing 36.

### <Deceleration mechanism part>

As shown in FIG. 2 to FIG. 4, the deceleration mechanism part 40 includes the housing 41 that accommodates the deceleration mechanism SD. The housing 41 is formed in a substantially flat rectangular parallelepiped shape by using a resin material such as plastic, and has a first wall part 42, a second wall part 43, and a third wall part 44. Among the first wall part 42, the second wall part 43, and the third wall part 44, the first wall part 42 occupies the largest proportion.

As shown in FIG. 4, a worm wheel accommodation part 45 is provided on the inner side the housing 41. The worm wheel accommodation part 45 is disposed in a portion close to the third wall part 44. Inside the worm wheel accommodation part 45, a worm wheel 46 forming the deceleration mechanism SD is rotatably accommodated. Here, the worm wheel 46 is made of a resin material such as plastic, achieving weight reduction. The worm wheel 46 is provided with a tooth part 46a, and the tooth part 46a is meshed with the worm 35 inside the housing 41.

In other words, the deceleration mechanism SD is a worm decelerator that provides a relatively large deceleration ratio. Specifically, in the embodiment, the deceleration ratio of the deceleration mechanism SD is [1:67]. That is, the deceleration ratio is such that when the worm 35 rotates 67 times, the worm wheel 46 finally completes one rotation. Of course, it is also possible to set other deceleration ratios.

In addition, the axial base end side of an output shaft 47 made of a round steel bar is fixed to the rotation center of the worm wheel 46. Comparatively, the output gear 47a (see FIG. 2) meshed with the pair of drive cables 17a, 17b (see FIG. 1) is integrally provided at the axial tip side of the output shaft 47.

Therefore, the high-speed rotation of the rotation shaft 34 is decelerated by the deceleration mechanism SD, and the rotation force that has been decelerated and converted to high torque is transmitted to the pair of drive cables 17a, 17b via the output shaft 47 and the output gear 47a. The deceleration mechanism SD is formed by the worm 35 and the worm wheel 46.

Here, the worm wheel accommodation part 45 has an opening on the side opposite to the side of the first wall part 42 (not shown). As shown in FIG. 3, the opening portion of the worm wheel accommodation part 45 is closed by a cover member 48 formed in a substantially disc shape by press-working or other processing of a steel plate.

As shown in FIG. 4, a worm accommodation part 49 is provided on the inner side the housing 41. The worm accommodation part 49 is disposed in a portion close to the second wall part 43. The worm accommodation part 49 is disposed in the vicinity of the worm wheel accommodation part 45, and the interiors of the accommodation parts 49, 45 are in communication with each other. Accordingly, it is possible for the worm 35 and the tooth part 46a to mesh with each other.

The worm accommodation part 49 extends in the axial direction of the rotation shaft 34, and the second metal BR2 that rotatably supports the other side (the left side in FIG. 4) of the rotation shaft 34 in the axial direction is accommodated in the other side of the worm accommodation part 49 in the axial direction.

Furthermore, the bearing mounting part 50 is provided on the inner side of the housing 41. The bearing mounting part 50 is disposed on one side (the right side in FIG. 4) of the worm accommodation part 49 in the axial direction and opens toward the motor case 31. Inside the bearing mounting part 50, the ball bearing 36 is accommodated, and the entire periphery of the other side (the left side in FIG. 4) of the outer race 36b in the axial direction is supported by the bearing mounting part 50.

A support ring SR formed in a substantially cylindrical shape is fixed by being press-fit to the bearing mounting part 50. The support ring SR is formed, for example, of a sintered material made by compressing metal powder. The outer race 36b is disposed on the radial inner side of the support ring SR with a minute gap (not shown) in between. Here, an outer diameter dimension D7 (see FIG. 12) of the ball bearing 36 is larger than the inner diameter dimension D5 (see FIG. 12) of the small-diameter through diameter hole 38f in the annular support part 38c (D7>D5).

As shown in FIG. 4, the rotation shaft 34 is supported at three points by the first metal BR1, the second metal BR2, and the ball bearing 36. Accordingly, the worm 35 is suppressed from separating from the tooth part 46a of the worm wheel 46 (disengagement of meshing) during the operation of the sunroof motor 20, ensuring reliable power transmission between them.

The inner race 36a is fixed to the rotation shaft 34, and the outer race 36b is sandwiched between the bearing mounting part 50 and the bearing support member 38. Therefore, the rotation shaft 34 does not move in the axial direction thereof. Consequently, there is no need to provide thrust bearings on both sides of the rotation shaft 34 in the axial direction, thereby reducing the number of parts.

On the other hand, to smoothly rotate the rotation shaft 34 with three-point support, it is necessary to improve the accuracy of the parts forming the sunroof motor 20. However, such improvement in part accuracy is unrealistic as it would lead to complication in the manufacturing process and increased product cost. Therefore, in the embodiment, the ball bearing 36 (outer race 36b) is disposed on the radial inner side of the support ring SR with a minute gap in between.

Accordingly, the minute gap absorbs manufacturing errors of parts and differences in linear expansion between parts. Therefore, smooth rotation of the rotation shaft 34 is ensured. In this way, the minute gap between the support ring SR and the outer race 36b has a function of absorbing manufacturing errors of parts forming the sunroof motor 20 and differences in linear expansion between parts.

### <Motor accommodation part>

Also, as shown in FIG. 4, FIG. 11, and FIG. 12, a motor accommodation part 51 formed in a substantially box shape is provided on the inner side of the housing 41. The motor accommodation part 51 is disposed on the side of the motor case 31 (right side in FIG. 4) of the bearing mounting part 50 in the axial direction of the rotation shaft 34.

A portion of the electric motor part 30 is accommodated in the motor accommodation part 51. Specifically, as shown in FIG. 4, the wall part 38b of the bearing support member 38 forming the electric motor part 30 extends into the motor accommodation part 51.

### <Metal jacket>

Here, as shown in FIG. 2 and FIG. 3, a metal jacket 60 formed by bending a thin steel plate is partially mounted on the outer side of the housing 41. The metal jacket 60 has a function of preventing electrical noise generated inside the housing 41 from radiating to the outside of the housing 41. Accordingly, electrical noise is prevented from reaching car audio equipment, etc., (not shown) mounted in the vehicle 12 (see FIG. 1), thereby preventing the radio noise, etc., from being generated.

### <Assembly procedure>

Next, the assembly procedure of the rotor 33 formed as described above and the assembly procedure (manufacturing method) of the sunroof motor 20 will be described in detail using the drawings.

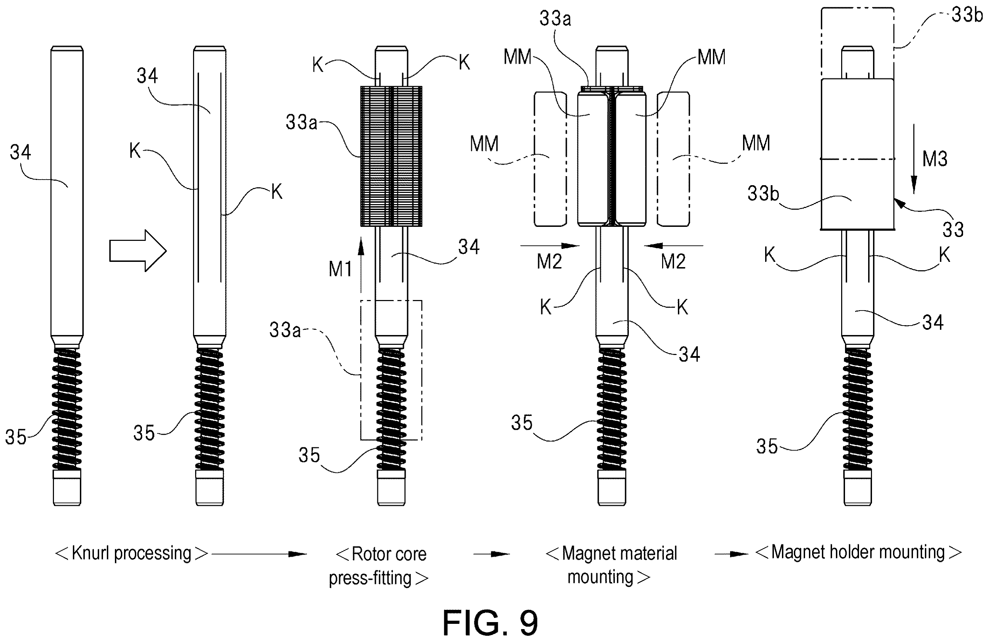

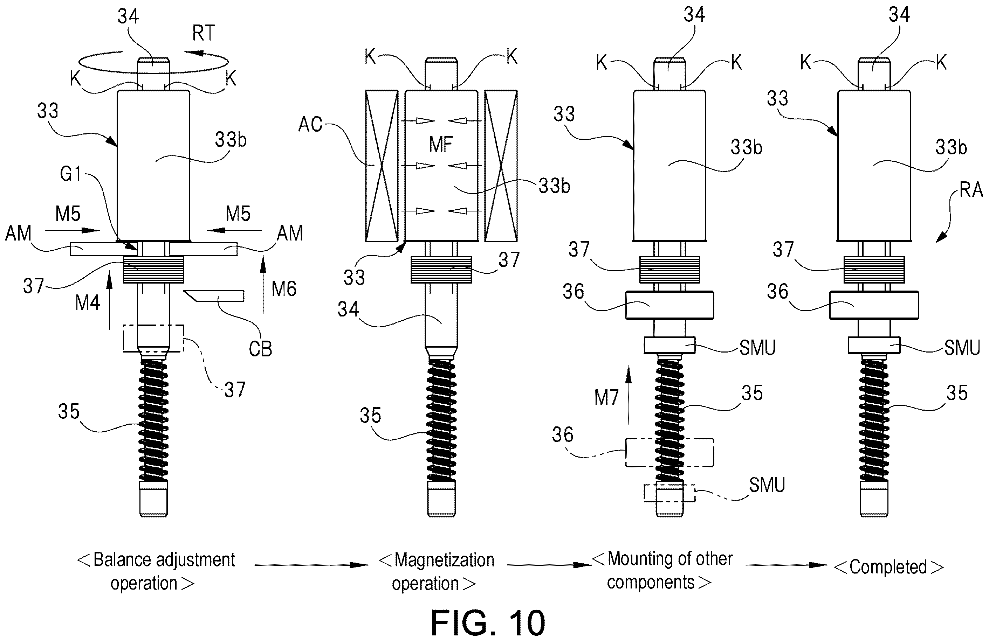

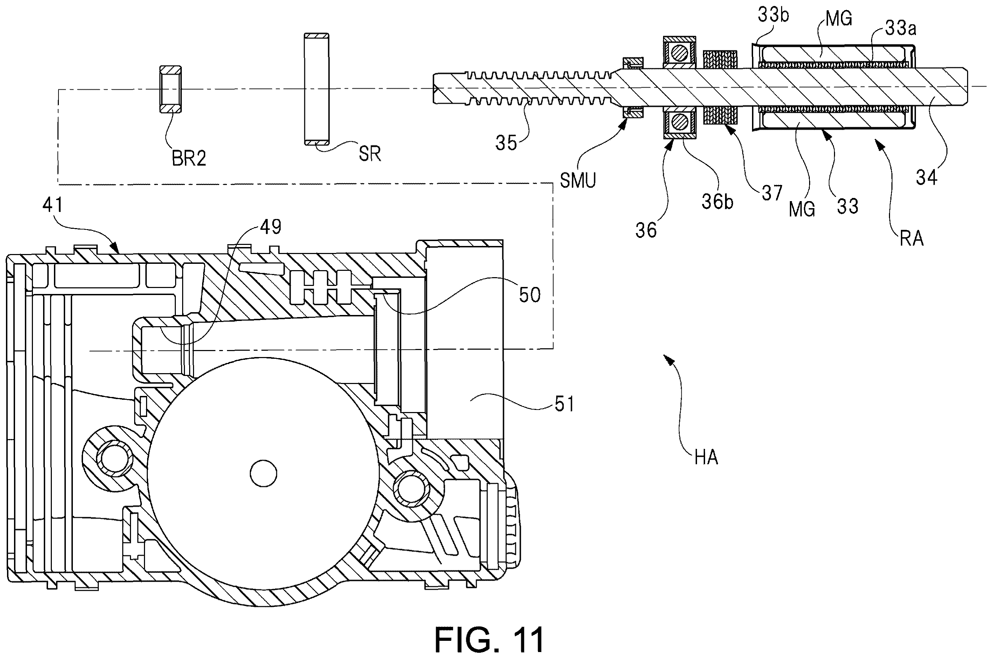

FIG. 9 is a view describing an assembly procedure (1) of the rotor. FIG. 10 is a view describing an assembly procedure (2) of the rotor. FIG. 11 is a view describing an assembly procedure (1) of the sunroof motor. FIG. 12 is a view describing an assembly procedure (2) of the sunroof motor.

### <Assembly procedure of rotor>

As shown in FIG. 9 and FIG. 10, in order to assemble the rotor 33, the rotation shaft 34, the rotor core 33a, a non-magnetized magnet material MM, a magnet holder 33b, the adjustment member 37, the ball bearing 36, and the sensor magnet unit SMU are prepared.

### <Knurl processing>

Then, as shown in FIG. 9, knurl processing is performed to form knurls K on the surface of the rotation shaft 34 along the axial direction thereof. Here, knurl processing refers to a process of forming serrations (knurl) on the surface, which enables the rotor core 33a and the adjustment member 37 to be firmly fixed to the rotation shaft 34 by press-fitting.

### <Rotor core press-fitting>

Next, the operation of press-fitting and fixing the rotor core 33a to the rotation shaft 34 is performed. Specifically, as shown by an arrow M1 in FIG. 9, the operation of press-fitting the rotor core 33a to the rotation shaft 34 is performed from the other side of the rotation shaft 34 in the axial direction, that is, from the side of the worm 35. Then, the rotor core 33a is disposed at a predetermined position in the axial direction of the rotation shaft 34. Here, the process of fixing the rotor core 33a to the rotation shaft 34 corresponds to the rotor core fixing process in the invention.

### <Magnet material mounting>

After that, the operation of fixing the non-magnetized magnet material MM to the radial outer side of the rotor core 33a fixed to the rotation shaft 34 is performed. Specifically, an adhesive (not shown) is applied to the inner side of a total of four magnet materials MM, and as indicated by an arrow M2 in FIG. 9, each magnet material MM is mounted on the outer peripheral part of the rotor core 33a. Here, since the magnet material MM is not yet magnetized and does not have magnetic force, the mounting operation of the magnet material MM onto the rotor core 33a can be performed easily. Here, the process of fixing the non-magnetized magnet material MM to the rotor core 33a corresponds to the magnet material fixing process in the invention.

### <Magnet holder mounting>

Then, as shown by an arrow M3 in FIG. 9, the operation of mounting the magnet holder 33b on the outer peripheral part of each magnet material MM is performed. Specifically, the magnet holder 33b is mounted from one side (the upper side in FIG. 9) of the rotation shaft 34 in the axial direction. Then, the magnet holder 33b is disposed at a predetermined position of the rotation shaft 34 in the axial direction, that is, at a position that completely covers the outer peripheral part of the magnet material MM.

### <Balance adjustment operation>

After that, as shown by an arrow M4 in FIG. 10, the adjustment member 37 is fixed to the rotation shaft 34 by press-fitting. Specifically, the operation of press-fitting the adjustment member 37 to the rotation shaft 34 is performed from the side of the worm 35 of the rotation shaft 34 in the axial direction. Here, the adjustment member 37 is fixed at a position separated by a separation distance L1 (see FIG. 4) from the magnet material MM in the axial direction of the rotation shaft 34.

Next, the rotation shaft 34 with the magnet holder 33b and the adjustment member 37 mounted is attached to a balance adjustment device (details not shown), and the rotation shaft 34 is rotated as shown by an arrow RT in FIG. 10. At this time, as shown by an arrow M5 in FIG. 10, a pair of support arms AM provided on the balance adjustment device are inserted into the first gap G1 between the magnet material MM (magnet holder 33b) and the adjustment member 37, and the rotation shaft 34 is supported by the pair of support arms AM.

After that, in the state where the rotation shaft 34 is rotated as shown by an arrow RT, as shown by an arrow M6 in FIG. 10, a cutting blade CB provided on the balance adjustment device is moved while being pressed against the outer peripheral part of the adjustment member 37, thereby partially cutting off the outer peripheral part of the adjustment member 37. Accordingly, the rotation wobbling of the rotor 33 caused by minute warping of the rotation shaft 34 that varies from product to product, or minute position misalignment, etc., between the rotation center of the rotation shaft 34 and the rotation center of the rotor core 33a can be suppressed.

Here, the number of steel plates 37a (see FIG. 5 and FIG. 6) forming the adjustment member 37 is determined by the specification of the sunroof motor 20, specifically, by the length and weight, etc., of the rotation shaft 34 (rotor 33). That is, according to the adjustment member 37, rough adjustment is possible by adjusting the number of steel plates 37a, and the cutting operation of the adjustment member 37 as described above in the subsequent fine adjustment can be minimized. Therefore, the operation time for the cutting operation can be shortened, and the discharge amount of cutting chips can be minimized.

At the timing of the balance adjustment operation, each magnet material MM (see FIG. 9) does not have magnetic force, so the cutting chips (cutting waste) of the adjustment member 37 do not adhere to the magnet material MM or the magnet holder 33b. In this way, by performing the balance adjustment operation before magnetization, improvement in assembly workability is improved.

Here, the process of fixing the adjustment member 37 at a position separated by the separation distance L1 from the magnet material MM in the axial direction of the rotation shaft 34 and performing balance adjustment by cutting the outer peripheral part of the adjustment member 37 corresponds to the rotational balance adjustment process in the invention.

### <Magnetization operation>

After completing the <balance adjustment operation>, the <magnetization operation> is performed as shown in FIG. 10. Specifically, the rotor 33 that has completed balance adjustment is set in a magnetization device (not shown in detail). At this time, the total of four magnet materials MM (magnet holder 33b) are set on the radial inner side of the air core coil AC that forms the magnetization device. Then, a magnetization current is passed through the air core coil AC to generate a magnetic field MF (see the white arrow in FIG. 10) on the radial inner side. Accordingly, each magnet material MM (see FIG. 9) is magnetized, and the magnetic materials MM are turned into the magnets MG (see FIG. 4) having magnetic force. Here, the process of magnetizing the total of four magnet materials MM corresponds to the magnet magnetization process in the invention.

### <Mounting of other components>

Subsequently, as shown by an arrow M7 in FIG. 10, the operation of mounting the ball bearing 36 and the sensor magnet unit SMU to the rotation shaft 34 from the side of the worm 35 of the rotation shaft 34 is performed. It should be noted that both the ball bearing 36 and the sensor magnet unit SMU are fixed to the rotation shaft 34 by press-fitting.

In addition, the ball bearing 36 adopts a high-precision ball bearing that is a general-purpose product, and the sensor magnet unit SMU is small in diameter and lightweight. Therefore, even after the balance adjustment, the rotational balance of the rotor 33 (rotation shaft 34) is not disrupted. As a result, as shown in <Completed> in FIG. 10, the assembly of the rotor 33 is completed (the rotor assembly RA is completed).

### <Assembly procedure of sunroof motor>

Next, the procedure for mounting the assembled rotor 33 (rotor assembly RA) into the housing 41, that is, the assembly procedure of the sunroof motor 20, will be described in detail with reference to the drawings.

Here, referring to FIG. 12, the size relationship among the outer diameter dimension D3 of the adjustment member 37, the outer diameter dimension D4 of the rotor 33, the inner diameter dimension D5 of the small-diameter through hole 38f, the inner diameter dimension D6 of the large-diameter through hole 38g, and the outer diameter dimension D7 of the ball bearing 36 is as follows: D6 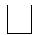 D7>D5>D4>D3.

As a result, it is possible to insert the rotor 33 and the adjustment member 37 through the radial inner side of the annular support part 38c, and to make the annular flat surface 38d contact the entire periphery of one side of the outer race 36b in the axial direction. Therefore, as shown in FIG. 11 and FIG. 12, the sunroof motor 20 can be easily assembled.

### <Assembly procedure (1)>

As shown in FIG. 11, first, the housing 41, the second metal BR2, the support ring SR, and the rotor assembly RA are prepared. Here, the rotor assembly RA refers to the completely assembled rotor 33 shown in <Completed> in FIG. 10.

Then, along the dot-chain line, first, the second metal BR2 is mounted to the worm accommodation part 49. Next, the support ring SR is mounted in the bearing mounting part 50. After that, the side of the worm 35 of the rotor assembly RA in the axial direction faces toward the motor accommodation part 51. Then, the worm 35 of the rotor assembly RA is accommodated in the worm accommodation part 49, and the ball bearing 36 is mounted to the bearing mounting part 50.

At this time, the side of the worm 35 of the rotation shaft 34 is supported by the second metal BR2, and the outer race 36b is inserted into the support ring SR. Since a minute gap (not shown) is provided between the outer race 36b and the support ring SR, the mounting operation of the rotor assembly RA into the housing 41 can be easily performed.

This completes the mounting operation of the rotor assembly RA into the housing 41. Here, the housing 41 with the rotor assembly RA assembled through <Assembly Procedure (1)> is referred to as a housing assembly HA.

### <Assembly procedure (2)>

Next, as shown in FIG. 12, the housing assembly HA, the bearing support member 38, the motor assembly MA, and the total of three fixing screws SC are prepared. The total of three conductive members 39 are mounted to the bearing support member 38. The motor assembly MA refers to the assembly where the first metal BR1 is mounted to the bottom wall part 31b of the motor case 31, and the stator 32 is fixed to the sidewall part 31a of the motor case 31.

Then, along the dot-chain line, first, the side of the housing 41 of the bearing support member 38 faces toward the motor accommodation part 51. Then, the wall parts 38b provided on the bearing support member 38 are inserted into the motor accommodation part 51. At this time, since the outer diameter dimension D3 of the adjustment member 37 and the outer diameter dimension D4 of the rotor 33 are smaller than the inner diameter dimension D5 of the small-diameter through hole 38f in the annular support part 38c (D3<D4<D5), the adjustment member 37 and the rotor 33 can be easily inserted through the radial inner side of the small-diameter through hole 38f.

After that, the outer race 36b enters the inner side of the total of three positioning protrusions 38e provided on the bearing support member 38. Since the inner diameter dimension D5 of the small-diameter through hole 38f is smaller than the outer diameter dimension D7 of the outer race 36b (D5<D7), the entire periphery of the annular flat surface 38d of the annular support part 38c contacts one side of the outer race 36b in the axial direction. Also, the adjustment member 37 is disposed in the dead space DS (see FIG. 4) formed on the radial inner side of the annular support part 38c.

In this way, the entire periphery of the other side (left side in FIG. 12) of the outer race 36b in the axial direction is supported by the bearing mounting part 50, and the entire periphery of one side (right side in FIG. 12) of the outer race 36b in the axial direction is supported by the annular flat surface 38d of the annular support part 38c. Therefore, the tilting of the ball bearing 36 (rotation shaft 34) is suppressed.

Next, the motor assembly MA faces toward the motor accommodation part 51. At this time, the side of the bearing support member 38 of the motor case 31 faces toward the motor accommodation part 51. Then, while inserting the rotor 33 into the radial inner side of the stator 32, the opening side of the motor case 31 abuts against the housing 41. At this time, one side of the rotation shaft 34 in the axial direction is supported by the first metal BR1.

At this time, the bearing support member 38 is positioned by the outer race 36b, and the motor assembly MA is positioned by the rotation shaft 34. Also, the ball bearing 36 and the rotation shaft 34 are accurately disposed on the same axis with each other. Therefore, the bearing support member 38 and the motor assembly MA are also accurately disposed on the same axis with each other. Accordingly, the total of three conductive members 39 and the three-phase coils CL can be easily and accurately positioned, and these can be easily electrically connected to each other (improved assembly workability).

After that, by using a fastening tool such as a Phillips screwdriver (not shown), a total of three fixing screws SC are screwed into the housing 41. Accordingly, the motor case 31 and the housing 41 are firmly fixed to each other. In this way, after assembling the rotor assembly RA to the housing 41, the bearing support member 38 and the motor assembly MA are assembled to the housing assembly HA, and the fixing operation of the bearing support member 38 and the motor assembly MA to the housing assembly HA is completed.

After <Assembly procedure (2)>, the worm wheel 46 (see FIG. 4) is accommodated in the worm wheel accommodation part 45 of the housing 41, and the opening portion of the worm wheel accommodation part 45 is closed with the cover member 48 (see FIG. 3). Accordingly, the assembly operation of the sunroof motor 20 is completed.

As described in detail above, according to the embodiment, the rotor 33 includes the rotation shaft 34, the rotor core 33a fixed to the rotation shaft 34, the magnet MG fixed to the rotor core 33a, and the adjustment member 37 fixed to the rotation shaft 34 and adjusting the rotational balance of the rotor 33. The separation distance L1 between the magnet MG and the adjustment member 37 in the axial direction of the rotation shaft 34 is longer than the separation distance L2 between the magnet MG and the stator 32 in the radial direction of the rotation shaft 34 (L1>L2).

Accordingly, it is possible to adjust the rotational balance of the rotor 33, and to dispose the adjustment member 37 to be further away from the magnet MG than the stator 32. Therefore, the magnetic flux [Wb] of the magnet MG is restrained from flowing toward the adjustment member 37, and the magnetic flux [Wb] of the magnet MG can be efficiently directed toward the stator 32. Therefore, it is also possible to suppress the reduction of the output torque of the sunroof motor 20.

Also, according to the embodiment, since the adjustment member 37 is formed in a cylindrical shape by laminating multiple steel plates 37a, rough adjustment can be made by adjusting the number of the steel plates 37a, and the cutting operation of the adjustment member 37 in the subsequent fine adjustment can be minimized. Therefore, it is possible to shorten the operation time for the cutting work and to minimize the discharge amount of cutting chips.

Furthermore, according to the embodiment, since the outer diameter dimension D3 of the adjustment member 37 is equal to or smaller than the outer diameter dimension D4 of the rotor 33, the bearing support member 38 having the small-diameter through hole 38f with the inner diameter dimension D5 (D5>D4>D3) can be easily mounted from one side (the side opposite to the side of the worm 35) of the rotation shaft 34 in the axial direction (see FIG. 12). Therefore, the assembly workability of the sunroof motor 20 is not reduced.

Also, according to the embodiment, the rotation shaft 34 is rotatably supported on one side in the axial direction by the first metal BR1, rotatably supported on the other side in the axial direction by the second metal BR2, and rotatably supported at the axial center portion by the ball bearing 36, and the adjustment member 37 is disposed between the ball bearing 36 and the rotor core 33a. Accordingly, a relatively large space of the rotation shaft 34 in the axial direction can be effectively utilized for the arrangement of the adjustment member 37, and consequently, the enlargement of the entire sunroof motor 20 can be suppressed.

Furthermore, according to the embodiment, the rotor 33 can be assembled through the rotor core fixing process for fixing the rotor core 33a to the rotation shaft 34, the magnet material fixing process for fixing the non-magnetized magnet material MM to the rotor core 33a, the rotational balance adjustment process for fixing the adjustment member 37 at a position away from the magnet material MM in the axial direction of the rotation shaft 34 and cutting the outer peripheral part of the adjustment member 37, and the magnet magnetization process that is performed after the rotational balance adjustment process to magnetize the magnet material MM.

Accordingly, the cutting chips from the adjustment member 37 are prevented from adhering to the magnet material MM or the magnet holder 33b. By performing the balance adjustment operation before magnetization in this way, the assembly workability can be improved.

Also, according to the embodiment, as described above, for example, it is possible to shorten the operation time for cutting work and minimize the discharge amount of the cutting chips. Therefore, it is possible to achieve energy conservation in manufacturing, thereby realizing particularly Goal 7 (Ensure access to affordable, reliable, sustainable and modern energy for all) and Goal 13 (Take urgent action to combat climate change and its impacts) of the Sustainable Development Goals (SDGs) established by the United Nations.

It goes without saying that the invention is not limited to the above embodiment and can be variously modified within a range that does not deviate from its essence. In the embodiments, the invention is shown applied to the sunroof motor 20 used in the sunroof device 10 of the vehicle 12, but the invention is not limited to this and can also be applied to, for example, in-vehicle motors (motor devices) used in slide door devices, power window devices, wiper devices, etc., mounted on vehicles.

Additionally, the material, shape, dimension, number, installation location, etc., of each component in the above embodiments can be arbitrary as long as the disclosure can be achieved, and are not limited to the embodiments.

### [Reference Signs List]

10: sunroof device, 11: roof panel, 12: vehicle, 13: roof, 14: opening part, 15a, 15b: shoe, 16: guide rail, 17a, 17b: drive cable, 20: sunroof motor (motor device), 30: electric motor part, 31: motor case, 31a: sidewall part, 31b: bottom wall part, 32: stator, 32a: stator core, 32b: tooth, 33: rotor, 33a: rotor core, 33b: magnet holder, 34: rotation shaft, 35: worm, 36: ball bearing (third bearing), 36a: inner race, 36b: outer race, 37: adjustment member, 37a: steel plate, 38: bearing support member, 38a: support body, 38b: wall part, 38c: annular support part, 38d: annular flat surface, 38e: positioning protrusion, 38f: small diameter through hole, 38g: large diameter through hole, 39: conductive member, 40: deceleration mechanism part, 41: housing, 42: first wall part, 43: second wall part, 44: third wall part, 45: worm wheel accommodation part, 46: worm wheel, 46a: tooth part, 47: output shaft, 47a: output gear, 48: cover member, 49: worm accommodation part, 50: bearing mounting part, 51: motor accommodation part, 60: metal jacket, AC: air core coil, AG: air gap, AM: support arm, BK: bracket member, BR1: first metal (first bearing), BR2: second metal (second bearing), CB: cutting blade, CL: coil, DS: dead space, FG: front glass, G1: first gap, G2: second gap, HA: housing assembly, K: knurl, L1, L2: separation distance, MA: motor assembly, MF: magnetic field, MG: magnet, MM: magnet material, RA: rotor assembly, SC: fixing screw, SD: deceleration mechanism, SM: sensor magnet, SMU: sensor magnet unit, SR: support ring

## Claims

1. A motor device, comprising:
a stator;
a rotor, rotating with respect to the stator,
wherein the rotor comprises:
a rotation shaft;
a rotor core, fixed to the rotation shaft;
a magnet, fixed to the rotor core; and
an adjustment member, fixed to the rotation shaft and adjusting rotation balance of the rotor, and
a separation distance between the magnet and the adjustment member in an axial direction of the rotation shaft is longer than a separation distance between the magnet and the stator in a radial direction of the rotation shaft.

2. The motor device as claimed in claim 1, wherein the adjustment member is formed in a cylindrical shape by stacking a plurality of steel plates.

3. The motor device as claimed in claim 2, wherein an outer diameter dimension of the adjustment member is equal to or less than an outer diameter of the rotor.

4. The motor device as claimed in claim 1, wherein, in the rotation shaft, one side in the axial direction is rotatably supported by a first bearing, an other side in the axial direction is rotatably supported by a second bearing, and a central portion in the axial direction is rotatably supported by a third bearing, and
the adjustment member is disposed between the third bearing and the rotor core.

5. A method for manufacturing a motor device, wherein the motor device comprises:
a stator;
a rotor, rotating with respect to the stator,
the rotor comprises:
a rotation shaft;
a rotor core, fixed to the rotation shaft;
a magnet, fixed to the rotor core; and
an adjustment member, fixed to the rotation shaft and adjusting rotation balance of the rotor, and the method for manufacturing the motor device comprises:
a rotor core fixing process for fixing the rotor core to the rotation shaft;
a magnet material fixing process for fixing a magnet material, which has not been magnetized, to the rotor core;
a rotation balance adjustment process for fixing the adjustment member at a position separated from the magnet material in an axial direction of the rotation shaft and cutting an outer peripheral part of the adjustment member; and
a magnet magnetization process, performed after the rotation balance adjustment process to magnetize the magnet material.
